# EUROPEAN PATENT APPLICATION

(11) **EP 3 076 307 A1**
(43) Date of publication of application: **05.10.2016**
(21) Application number: 14794553.9
(22) Date of filing: 16.04.2014
(51) Int. Cl.: G06F 17/30, H04L 29/06

(54) **METHOD AND DEVICE FOR RESPONDING TO A REQUEST, AND DISTRIBUTED FILE SYSTEM**

(30) Priority: 25.11.2013 CN 201310601094
(71) Applicant: ZTE Corporation, Shenzhen, Guangdong 518057 (CN)
(72) Inventor: HONG, Jianfeng, Shenzhen Guangdong Province 518057 (CN); LEI, Aimin, Shenzhen Guangdong Province 518057 (CN); WANG, Jun, Shenzhen Guangdong Province 518057 (CN)
(74) Representative: Novagraaf Technologies
(86) International application number: PCT/CN2014/075522
(87) International publication number: WO 2014/180232

(57) **Abstract**

The embodiments of disclosure disclose a method and device for responding to a request, and a Distributed File System (DFS). The method comprises: receiving from a file access client a request for operating a target file, wherein the request carries a full path of the target file; determining a file identifier and a file location register identifier corresponding to the full path, wherein a file location register corresponding to the file location register identifier isg used for providing location information of a data block of the target file; sending the file identifier and the file location register identifier to the file access client. The embodiments of the disclosure solves the problem that a DFS has a high demand on a file location register hardware, lowers a demand on the file location register hardware, and improves a stability of the system.

## Description

### Technical Field

The disclosure relates to the communications field, and in particular to a method and device for responding to a request, and a Distributed File System (DFS).

### Background

In the related art, a architecture of a DFS merely includes a file location register, a file access client and a file access server, wherein:
the file location register is responsible for data block distribution and management of files, and functions of the file location register include: block distribution, garbage collection and cleaning, load balancing, database copy and recovery;
the file access client is responsible for a proxy for applications to access a file system and provides a common file operation interface for the applications, for example, Open, Close, Read, Write, Seek and so on; and
the file access server is a location actually storing user data in a file system.

In the above system architecture, the file access client and the file access server are expandable, and there might be multiple file access clients and file access servers. However, there is generally one file location register used for storing the data block information of the entire DFS; and all file access clients request the data block information corresponding to at least one file to-be-operated through this one file location register.

Therefore, in the related art, a capacity and a performance of the DFS are impacted by a performance of the file location register and the DFS has a high demand on a hardware of the file location register. In the case that the hardware is difficult to meet the demand, a technical innovation must be made to the file location register.

As to a problem in the related art that the DFS has a high demand on the hardware of the file location register, no effective solution has been provided.

### Summary

The embodiments of disclosure provide a method and device for responding to a request, and a DFS, so as at least to solve the problem in the related art that the DFS has a high demand on a hardware of a file location register.

According to one aspect of the embodiments of the disclosure, a method for responding to a request is provided, including:
receiving from a file access client a request for operating a target file, wherein the request carries a full path of the target file; determining a file identifier and a file location register identifier corresponding to the full path, wherein a file location register corresponding to the file location register identifier is used for providing location information of a data block of the target file; and sending the file identifier and the file location register identifier to the file access client.

In an example embodiment, in a case that the request is a request for writing the target file, determining the file identifier and the file location register identifier corresponding to the full path includes: generating the file identifier for the target file according to the full path; determining the file location register identifier corresponding to the file identifier according to a predetermined policy.

In an example embodiment, after determining the file identifier and the file location register identifier corresponding to the full path, the method further includes: saving a association relationship among the full path, the file identifier and the file location register identifier.

In an example embodiment, after sending the file identifier and the file location register identifier to the file access client, the method further includes: acquiring, by the file access client, the location information, wherein the location information is generated, by the file location register, according to the file identifier and sent, by the file location register, to the file access client; writing, by the file access client, the target file to a disk location corresponding to the location information.

In an example embodiment, in a case that the request is a request for reading or deleting the target file, determining the file identifier and the file location register identifier corresponding to the full path includes: querying the file identifier and the file location register identifier corresponding to the full path.

In an example embodiment, after sending the file identifier and the file location register identifier to the file access client, the method further includes: acquiring, by the file access client, the location information, wherein the location information is found, by the file location register, from a file record according to the file identifier and sent, by the file location register, to the file access client; reading or deleting, by the file access client, the target file saved in a disk location corresponding to the location information.

According to another aspect of the embodiments of the disclosure, a device for responding to a request is provided, including: a receiving component, which is configured to receive from a file access client a request for operating a target file, wherein the request carries a full path of the target file; a determination component, which is configured to determine a file identifier and a file location register identifier corresponding to the full path, wherein a file location register corresponding to the file location register identifier is used for providing location information of a data block of the target file; and a sending component, which is configured to send the file identifier and the file location register identifier to the file access client.

In an example embodiment, the determination component includes: a generation element, which is configured to generate the file identifier for the target file according to the full path; a determination element, which is configured to determine the file location register identifier corresponding to the file identifier according to a predetermined policy.

In an example embodiment, the device further includes: a saving component, which is configured to save a association relationship among the full path, the file identifier and the file location register identifier.

In an example embodiment, the determination component includes: a querying element, which is configured to query the file identifier and the file location register identifier corresponding to the full path.

According to another aspect of the embodiments of the disclosure, a DFS is provided, including: a file access client, multiple file location registers and a file access server, wherein the system further includes: a directory tree meta data storage server, which is configured to determine, according to a full path of a target file carried in a request for operating a target file from the file access client, a file identifier and a file location register identifier corresponding to the full path and to send the file identifier and the file location register identifier to the file access client, wherein in the multiple file location registers, a file location register corresponding to the file location register identifier is used for providing location information of a data block of the target file.

Through the embodiments of the disclosure, by receiving from a file access client a request for operating a target file, wherein the request carries the full path of the target file; determining the file identifier and the file location register identifier corresponding to the full path, wherein the file location register corresponding to the file location register identifier is used for providing the location information of the data block of the target file; and sending the file identifier and the file location register identifier to the file access client, the problem that the DFS has the high demand on the hardware of the file location register is solved, thereby lowering the demand on the hardware of the file location register, and improving a stability of the system.

### Brief Description of Drawings

For a better understanding of the embodiments of the disclosure, accompanying drawings described hereinafter are provided to constitute one part of the application; the schematic embodiments of the disclosure and the description thereof are used to illustrate the disclosure but not to limit the disclosure improperly. In the drawings:
Fig. 1 is a flowchart of a method for responding to a request according to an embodiment of the disclosure;
Fig. 2 is a structural schematic diagram of a device for responding to a request according to an embodiment of the disclosure;
Fig. 3 is a structural schematic diagram of a device for responding to a request according to a first example embodiment of the disclosure;
Fig. 4 is a structural schematic diagram of a device for responding to a request according to a second example embodiment of the disclosure;
Fig. 5 is a structural schematic diagram of a DFS according to an embodiment of the disclosure;
Fig. 6 is a schematic diagram of a system structure of a DFS according to an example embodiment of the disclosure;
Fig. 7a to Fig. 7c is a flowchart of a user operating a file according to an example embodiment of the disclosure;
Fig. 8 is a flowchart of a process for writing a file according to an example embodiment of the disclosure;
Fig. 9 is a flowchart of a process for reading a file according to an example embodiment of the disclosure; and
Fig. 10 is a flowchart of a process for deleting a file according to an example embodiment of the disclosure.

### Detailed Description

It needs to be noted that embodiments in the application and characteristics of the embodiments can be combined if no conflict is caused. The disclosure is described below in detail by reference to the accompanying drawings in conjunction with the embodiments.

Steps shown in flowcharts in accompanying drawings can be executed, such as, in a computer system in which a group of computers can execute instructions, and the steps shown or described below can be executed in a different order in some cases although a logical order has been given in the flowcharts.

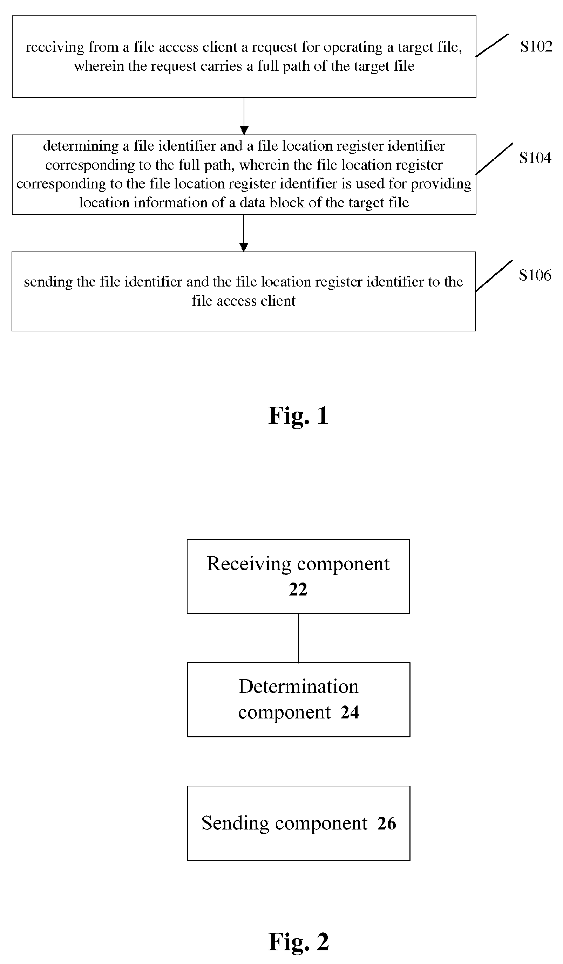

In one embodiment a method for responding to a request is provided; Fig. 1 is a flowchart of the method for responding to the request according to the embodiment of the disclosure; as shown in Fig. 1 the flow includes:
step S102: receiving from a file access client a request for operating a target file, wherein the request carries a full path of the target file;
step S104: determining a file identifier and a file location register identifier corresponding to the full path, wherein the file location register corresponding to the file location register identifier is used for providing location information of a data block of the target file;
step S106: sending the file identifier and the file location register identifier to the file access client.

Through the method for responding to the request provided in the above steps, in the case that the file access client requests to operate the target file, the file identifier and the file location register identifier corresponding to the target file are determined according to the full path carried in the request and are sent to the file access client. Thus it can be seen that a system to which the above method is applied can include multiple file location registers, which are distinguished through the file location register identifier; after the file access client acquires the file identifier and the file location register identifier through the above response process, the file access client can process a file through the corresponding file location register; that is to say, through the above method for responding to the request, the request from the file access client is load balanced according to the full path, so that multiple file location registers can be used to realize a function of the only one file location register in the related art, thereby lowering a demand on a hardware of the file location register, solving the problem in related art that a DFS has a high demand on the hardware of the file location register, and improving a stability of the system.

It needs to be noted that the full path and the file identifier of the above target file are unique information used for identifying the target file in a huge number of files, and the file location register identifier is also unique information used for identifying the file location register in multiple file location registers. Moreover, the full path also can serve as an unique file identifier used for identifying the target file. In an example embodiment, the full path also can be mapped as the file identifier uniquely through a specific algorithm in the related art.

In an example embodiment, the above request for operating the target file includes: requests to operate the target file, wherein the operation includes at least one of the following: writing, reading, seeking, deleting.

In an example embodiment, in the case that the request is a request for writing the target file, when determining the file identifier and the file location register identifier corresponding to the full path, a predetermined algorithm can be adopted to generate a file identifier for the target file according to the full path of the target file, or a file identifier is directly assigned to the target file; then a file location register identifier corresponding to the file identifier is determined according to a predetermined policy, for example, through load statistics condition of each file location register in the system, an identifier of the file location register with the minimum load within the statistical scope is determined as the file location register identifier corresponding to the file identifier.

In an example embodiment, after determining the file identifier and the file location register identifier corresponding to the full path, the method further includes: saving the association relationship among the full path, the file identifier and the file location register identifier. The saved association relationship is used for querying the corresponding file identifier and file location register identifier according to the full path carried in the request sent by the file access client in the condition of requesting to read or delete the target file.

In an example embodiment, after the file access client receives the file identifier and the file location register identifier, the file access client may request and acquire the location information of the data block of the target file from the corresponding file location register according to the request carrying the file identifier, wherein the location information is generated, by the file location register, according to the file identifier and sent, by the file location register, to the file access client; after the file access client receives the location information of the target file, the file access client writes the target file to a disk location corresponding to the location information, wherein the disk location is on a corresponding file access server.

In an example embodiment, in the case that the request is a request for reading or deleting the target file, the file identifier and the file location register identifier corresponding to the target file are determined by querying the file identifier and the file location register identifier corresponding to the full path in the saved association relationship.

In an example embodiment, after the file access client receives the file identifier and the file location register identifier, the file access client may request and acquire the location information of the data block of the target file from the corresponding file location register according to the request carrying the file identifier, wherein the location information is found from a file record according to the file identifier and sent to the file access client by the file location register; after the file access client receives the location information of the target file, the file access client reads or deletes the target file saved in the disk location corresponding to the location information, wherein the disk location is on the corresponding file access server.

In another embodiment of the disclosure, a device for responding to a request, which is applied to realizing the above method for responding to the request, is provided. The implementation of functions of the device has been described in the above method embodiments, and no further description is needed here.

Fig. 2 is a structural schematic diagram of a device for responding to a request according to an embodiment of the disclosure, as shown in Fig. 2, the device includes: a receiving component 22, a determination component 24 and a sending component 26, wherein, the receiving component 22 is configured to receive from a file access client a request for operating a target file, wherein the request carries a full path of the target file; the determination component 24 is coupled with the receiving component 22 and configured to determine a file identifier and a file location register identifier corresponding to the full path, wherein the file location register corresponding to the file location register identifier is used for providing location information of a data block of the target file; and the sending component 26 is coupled with the determination component 24 and configured to send the file identifier and the file location register identifier to the file access client.

Components and elements involved in the embodiments of the disclosure may be implemented by means of a software, or may be implemented by means of a hardware. The component and element described in this embodiment may be set in a processor, for example, the device can be described as: a processor includes the receiving component 22, the determination component 24 and the sending component 26. The names of these components do not form a limit to these components in some cases, for example, the receiving component also can be described as a component used for receiving the request for operating the target file from the file access client.

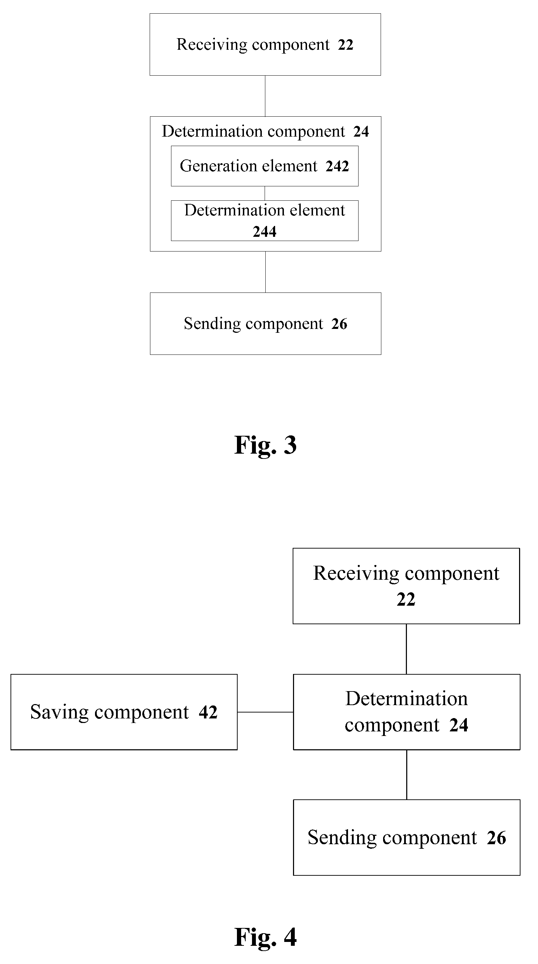

Fig. 3 is a structural schematic diagram of a device for responding to a request according to a first example embodiment of the disclosure; as shown in Fig. 3, in this example embodiment, the determination component 24 includes: a generation element 242, which is coupled with the receiving component 22 and configured to generate the file identifier for the target file according to the full path; a determination element 244, which is coupled with the generation element 242 and configured to determine the file location register identifier corresponding to the file identifier according to a predetermined policy.

Fig. 4 is a structural schematic diagram of a device for responding to a request according to a second example embodiment of the disclosure; as shown in Fig. 4, in this example embodiment, the device further includes: a saving component 42, which is coupled with the determination component 24 and configured to save the association relationship among the full path, the file identifier and the file location register identifier.

In an example embodiment, the determination component 24 further includes: a querying element 246, which is configured to query the file identifier and the file location register identifier corresponding to the full path.

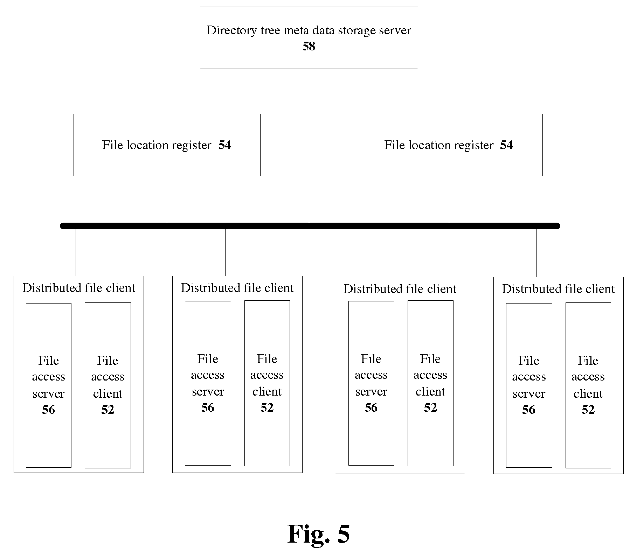

In another embodiment of the disclosure, a DFS is further provided. Fig. 5 is a structural schematic diagram of a DFS according to an embodiment of the disclosure, as shown in Fig. 5, the system includes: a file access client 52, multiple file location registers 54 and a file access server 56 and the system further includes: a directory tree meta data storage server 58, which is configured to determine, according to a full path of a target file carried in a request for operating the target file from the file access client 52, a file identifier and a file location register identifier corresponding to the full path and to send the file identifier and the file location register identifier to the file access client 52, wherein in the multiple file location registers 54, the file location register 54 corresponding to the file location register identifier is used for providing location information of a data block of the target file.

The meta data of a file is divided into two parts to be stored; file name space information is stored in the directory tree meta data storage server, while file block information (data block information) is stored in the file location register; the number of the file location registers may be expanded online, thereby improving a capacity of the system to the greatest extent; when to write a file, a file location register is allocated by the directory tree meta data storage server, a path of the file and a generated FILEID are associated and stored in the directory tree server (directory tree meta data storage server); when to operate the file in the following process, the file location register can be located through the directory tree server, thereby operating the file on the file location register; file block operation is conducted on the file location register to operate each database belonging to the file through multiple file location registers, thereby improving a performance of the system.

It needs to be noted that the function of the above directory tree meta data storage server 58 in the DFS is equivalent to the above device for responding to a request. The directory tree meta data storage server may be described and illustrated in conjunction with the above device and method for responding to the request, and no further description is needed here.

The disclosure is described and illustrated below in conjunction with example embodiments.

In one example embodiment, a method for implementing a storage of a huge number of files through multiple file location registers based on a DFS, relating to the storage field, and in particular to a mass data storage using the DFS.

In this example embodiment, a solution for meeting mass storage through multiple file location registers is provided when a single server cannot meet the storage scale.

In order to realize the above purpose, the solution provided by this example embodiment includes:
adding a new directory tree meta data storage server, of which functions include two parts: being partly responsible for data configuration and management, and being partly responsible for management of file name space.

A part of the data configuration and management is used for configuring the number of file location registers, file access servers and file access clients, the address of servers and the like, and to maintain these servers.

A part of the file name space management is used for mapping a file to a corresponding file location register according to a file path, and to query a storage location of a database in the corresponding file location register.

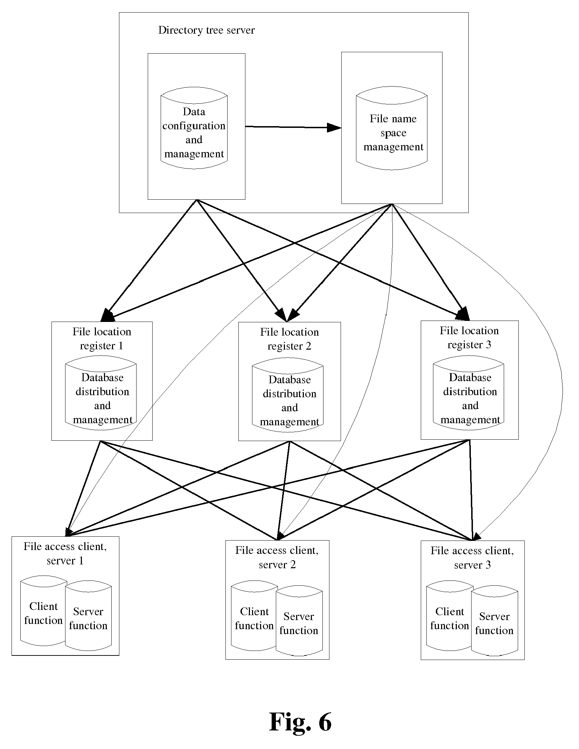

Fig. 6 is a system structure diagram of a DFS according to a preferred embodiment of the disclosure; Fig. 6 shows a schematic diagram of a system architecture including multiple file location registers according to an example embodiment of the disclosure.

As shown in Fig. 6, when a user needs to read/write a file, the user needs to send a full path of the file to a directory tree server (equivalent to the directory tree meta data storage server mentioned above); if to write a file, the directory tree server needs to store a file name space, then allocates an available file location register, and then sends, through a file access client, a file identifier (ID) generated by the directory tree server to the file location register allocated by the director tree server. After that, the file location register stores the file ID (called FLRID for short) and allocates a data block location for the file, and returns the location information to the file access client, which then writes the file information to a disk.

If to read a file, the director tree server locates in the name space through the full path of the file to query the file ID and a file location register ID that are assigned when the file is written, and returns the file ID and the file location register ID to the file access client, which then queries, through the file ID, the information of the disk on which a database is located in the corresponding file location register; then the file location register returns the corresponding information to the file access client, and the file access client reads the file in the disk.

Examples are provided below to illustrate the process of writing a file in a DFS including multiple file location registers, with reference to accompanying drawings.

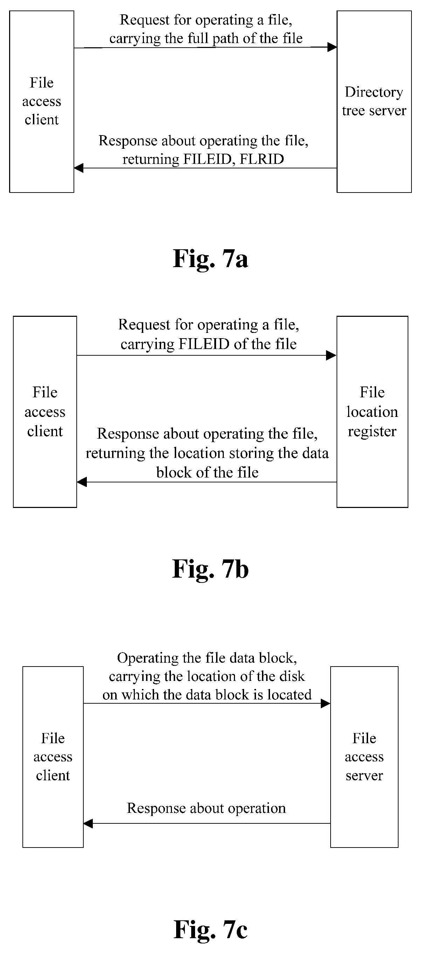

Fig. 7a to Fig. 7c is a flowchart of a user operating a file according to an example embodiment of the disclosure; the flow includes the following steps:
As shown in Fig. 7a, a user sends a request for operating a file to a file access client, which then sends a full path of a file name to a directory tree server; then the directory tree server acquires file information saved in a data table by querying in a name space, and returns a file ID (FILEID) and a file location register ID included in the file information to the file access client.
As shown in Fig. 7b, the file access client sends the request for operating the file to the file location register corresponding to the file location register ID through the FILEID and the file location register ID returned by the directory tree server; then the file location register queries a record corresponding to the FILEID through the FILEID, and associates to data block information for storing the file through the record corresponding to FILEID, and returns the data block information to the file access client.
As shown in Fig. 7c, the file access client sends a disk location storing data in a database, a data block size and other information to a file access server through the data block information returned by the file location register so as to make the file access server operate the data block information. The file access server sends a response to the file access client after completing the operation and when the file access client receives the response from the file access server, the process of operating the file is ended and a response about operating the file is returned to the user.

Thus, this example embodiment provides a new method for implementing meta data management in the DFS. Through this example embodiment, data block distribution and data block management of the file may be managed by multiple file location registers, thereby achieving a requirement of high capacity and high performance. In an existing DFS architecture, since a requirement of high capacity and high performance is difficult to realize, the example embodiment of the disclosure provides a new method applicable to the DFS for improving the performance and the capacity.

Hereinafter a system provided by the example embodiment of the disclosure and a working process of the system are described through three common file processing operations, namely, writing a file, reading a file and deleting a file.

### Example Embodiment 1

### A process of writing a file

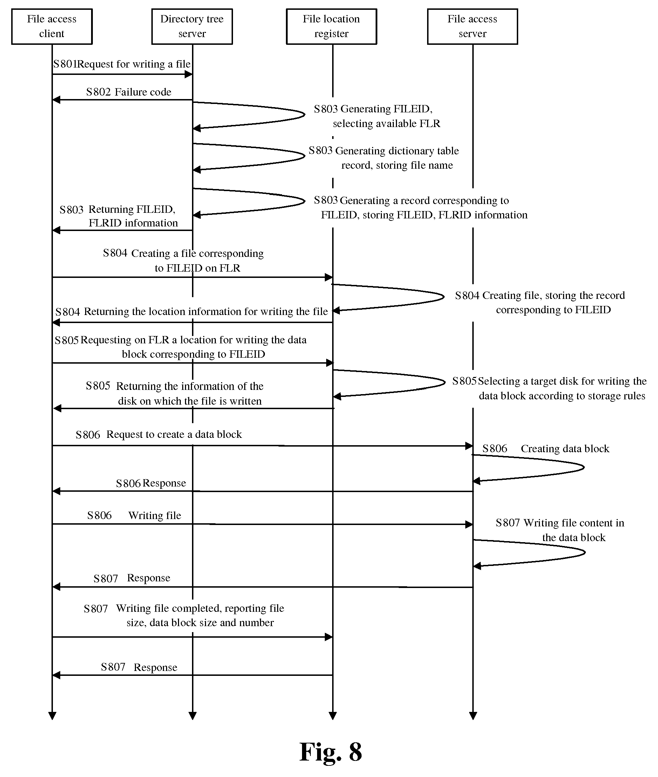

Fig. 8 is a flowchart of the process for writing the file according to an example embodiment of the disclosure; as shown in Fig. 8, the flow includes the following steps:
Step S801: a user writes a file through a file access client and sends a request for writing the file to a file access client thread; then, the file access client sends a full path of a file object to be written (called a target file) to a directory tree server so as to request for writing the file.
Step S802: the directory tree server firstly queries in a name space whether the file to be written already exists. If the file to be written already exists, the directory tree server replies to the file access client a failure code that the file already exists.
Step S803: if the file to be written does not exist, the directory tree server generates a file ID for writing, assigns an idle file location register ID and other information, generates a dictionary table record and stores a file name. And then the directory tree server generates a record corresponding to the FILEID of the file, stores the FILEID, the file location register ID and other information, and returns to the file access client a message about the file being successfully created.
Step S804: after receiving the message, the file access client sends a message about creating a file to the corresponding file location register. The file location register locates through the FILEID; if the file location register locates successfully, the file location register replies to the file access client that the file already exists; if file location register locates unsuccessfully, the file location register replies to the file access client that the file is successfully created, through a record for creating a FILE, a FILEID storage, creation time and other information.
Step S805: the file access client receives the response about creating the file and sends a request for creating a data block to the file location register through the FILEID; then the file location register selects a target disk for writing the data block according to storage rules and generates a record corresponding to the data block, stores the information of the disk on which the data block is located, and replies to the file access client the information of the disk on which the data block is created.
Step S806: the file access client receives the information, creates the data block in the file access server according to the disk information returned by the file location register and writes file content.
Step S807: the file access server replies a writing result and data block size information to the file access client after writing the file content and then the file access client reports the information received from the file access server to the file location register to require the file location register to record the data block size to the data block record; after recording the data block size, the file location register replies a response to the file access client.
Step S808: after the file access client receives the response, the process of writing a file is completed and the file access client sends a response to the user that writing file is completed.

### Example Embodiment 2

### A process of reading a file

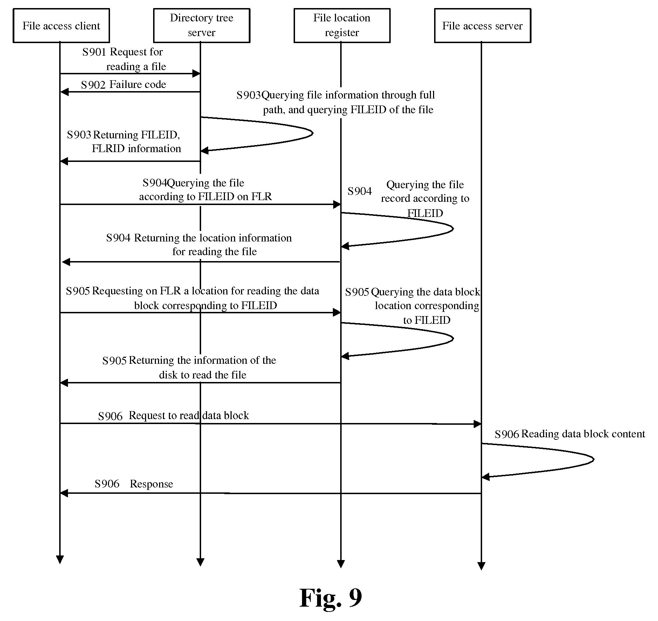

Fig. 9 is a flowchart of the process for reading the file according to an example embodiment of the disclosure; as shown in Fig. 9, the flow includes the following steps:
Step S901: a user reads a file through a file access client and sends a request for reading a file to a file access client thread; then, the file access client sends a full path of a file object to be read (called a target file) to a directory tree server for requesting to read the file.
Step S902: the directory tree server firstly queries in a name space whether the file to be read already exists. If the file to be read does not exist, the directory tree server replies to the file access client a failure code that the file already does not exist.
Step S903: if the file to be read already exists, the directory tree server queries a file record corresponding to the full path, returns a FILEID of the file and a file location register ID to the file access client.
Step S904: after receiving the message, the file access client sends a message about reading the file to the corresponding file location register; then the file location register locates through the FILEID; if the file location register locates unsuccessfully, the file location register replies to the file access client that the file does not exist; if the file location register locates successfully, the file location register sends the file record corresponding to the FILEID to the file access client.
Step S905: the file access client receives the response about reading file and sends a request for reading a data block of the file to the file location register through the FILEID; then the file location register queries the data block record through the FILEID, and sends information of a disk on which the data block is located to the file access client.
Step S906: the file access client receives the information, reads data block information in the file access server according to the disk information returned by the file location register and reads out a content of the data block.
Step S907: after reading out the file content, the file access client returns the file content information to the user.

### Example Embodiment 3

### A process of deleting a file

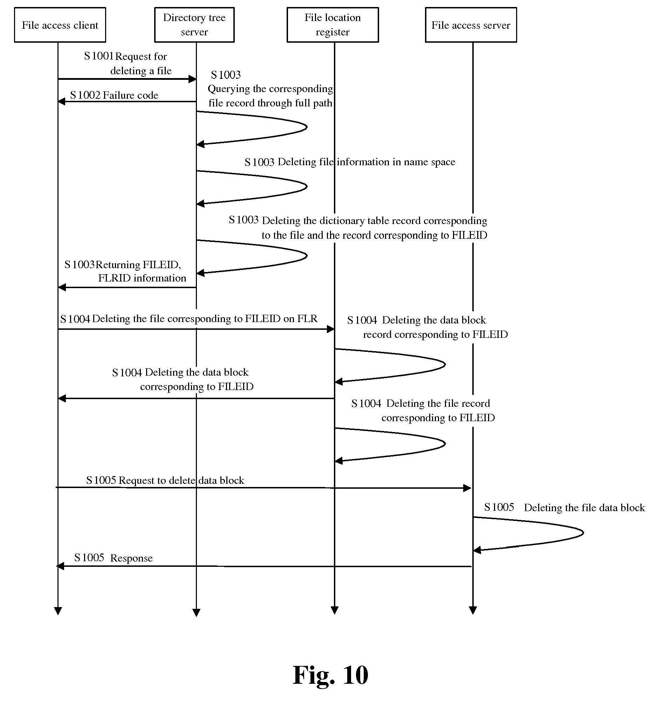

Fig. 10 is a flowchart of the process for deleting the file according to an example embodiment of the disclosure. As shown in Fig. 10, the flow includes the following process:
Step S1001: a user deletes the file through a file access client and sends a request for deleting the file to a file access client thread; then, the file access client sends a full path of a file object to be deleted (called a target file) to a directory tree server for requesting to delete the file.
Step S1002: the directory tree server first queries in a name space whether the file to be deleted already exists. If the file to be deleted does not exist, the directory tree server replies to the file access client a failure code that the file already does not exist.
S1003: if the file to be deleted already exists, the directory tree server queries a record corresponding to the file according to the full path of a file name, deletes file information from the name space, deletes a file record and deletes a file name record in a dictionary table, returns a FILEID of the file and a file location register ID information to the file access client.
Step S1004: after receiving the message, the file access client sends a message about deleting the file to the corresponding file location register; then the file location register locates through the FILEID; if the file location register locates unsuccessfully, the file location register replies to the file access client that the file does not exist; if the file location register locates successfully, the file location register queries the corresponding file record through the FILEID, and queries a corresponding data block record through the FILEID, notifies the file access client to delete data block information, and deletes the data block record and the file record corresponding to the FILEID.
Step S1005: the file access client sends a message about deleting the data block to the file access server; then the file access server deletes the corresponding data block according to a location of the data block included in the message.
Step S1006: after receiving a response from the file access server about deleting the data block, the file access client replies to the user that the file is deleted successfully.

Through the technical solution of the above embodiments, example embodiment and example implementations of the disclosure, a directory tree server is added, which divides meta data into two parts to store, wherein the directory tree server is responsible for the management and storage of name space, while the file location register is responsible for the management and storage of specific file location and data block information. However, in the related art, there is only one DFS server (equivalent to the file location register) and all data is stored in one server, if a relative high demand is required on the system capacity, a very high demand will be put forward on the memory of server. In addition, concurrent operation of stored objects is also impacted by the server performance.

To sum up, through the cooperation of the directory tree server and the file location register in the scheme design of the embodiments of the disclosure, that is, the directory tree server is responsible for the management and storage of the name space of stored objects, while the file location register is responsible for the operation of files and data blocks, the disclosure reduces the demand on the memory of server and improves the performance of system; moreover, the file location register can be expanded online, to improve the expansion capability of system, thereby making a great improvement to the capacity of system.

Obviously, those skilled in the art should understand that the components or steps described above can be implemented by a common computer device; the components or steps can be integrated on a single computing device or distributed on a network composed of a plurality of computing devices; optionally, the components or steps can be implemented by a programming code executable by a computing device, thus they can be stored in a storage device to be executed by a computing device, or manufactured into individual integrated circuit component respectively, or several of them can be manufactured into a single integrated circuit component to implement; in this way, the disclosure is not limited to any combination of specific hardware and software.

The above are only the example embodiments of the disclosure and not intended to limit the disclosure. For those skilled in the art, various modifications and changes can be made to the disclosure. Any modification, equivalent substitute and improvement made without departing from the scope of protection of the disclosure as defined in the appended claims.

### Industrial Applicability

As described above, the method and device for responding to the request, and the DFS provided by the embodiments of the disclosure have advantages as follows: reducing the demand on the memory of server and improving the performance of system, expanding the file location register online to improve the expansion capability of system, thereby making a great improvement to the capacity of system

## Claims

1. A method for responding to a request, comprising:
receiving from a file access client a request for operating a target file, wherein the request carries a full path of the target file;
determining a file identifier and a file location register identifier corresponding to the full path, wherein a file location register corresponding to the file location register identifier is used for providing location information of a data block of the target file; and
sending the file identifier and the file location register identifier to the file access client.

2. The method as claimed in claim 1, wherein in a case that the request is a request for writing the target file, determining the file identifier and the file location register identifier corresponding to the full path comprises:
generating the file identifier for the target file according to the full path;
determining the file location register identifier corresponding to the file identifier according to a predetermined policy.

3. The method as claimed in claim 2, wherein after determining the file identifier and the file location register identifier corresponding to the full path, the method further comprises:
saving a association relationship among the full path, the file identifier and the file location register identifier.

4. The method as claimed in claim 2, wherein after sending the file identifier and the file location register identifier to the file access client, the method further comprises:
acquiring, by the file access client, the location information, wherein the location information is generated, by the file location register, according to the file identifier and sent, by the file location register, to the file access client;
writing, by the file access client, the target file to a disk location corresponding to the location information.

5. The method as claimed in any one of claims 1 to 4, wherein in a case that the request is a request for reading or deleting the target file, determining the file identifier and the file location register identifier corresponding to the full path comprises:
querying the file identifier and the file location register identifier corresponding to the full path.

6. The method as claimed in claim 5, wherein after sending the file identifier and the file location register identifier to the file access client, the method further comprises:
acquiring, by the file access client, the location information, wherein the location information is found, by the file location register, from a file record according to the file identifier and sent, by the file location register, to the file access client;
reading or deleting, by the file access client, the target file saved in a disk location corresponding to the location information.

7. A device for responding to a request, comprising:
a receiving component, which is configured to receive from a file access client a request for operating a target file, wherein the request carries a full path of the target file;
a determination component, which is configured to determine a file identifier and a file location register identifier corresponding to the full path, wherein a file location register corresponding to the file location register identifier is used for providing location information of a data block of the target file; and
a sending component, which is configured to send the file identifier and the file location register identifier to the file access client.

8. The device as claimed in claim 7, wherein the determination component comprises:
a generation element, which is configured to generate the file identifier for the target file according to the full path;
a determination element, which is configured to determine the file location register identifier corresponding to the file identifier according to a predetermined policy.

9. The device as claimed in claim 8, wherein the device further comprises:
a saving component, which is configured to save a association relationship among the full path, the file identifier and the file location register identifier.

10. The device as claimed in any one of claims 7 to 9, wherein the determination component comprises:
a querying element, which is configured to query the file identifier and the file location register identifier corresponding to the full path.

11. A Distributed File System, DFS, comprising a file access client, multiple file location registers and a file access server, wherein the system further comprises:
a directory tree meta data storage server, which is configured to determine, according to a full path of a target file carried in a request for operating a target file from the file access client, a file identifier and a file location register identifier corresponding to the full path and to send the file identifier and the file location register identifier to the file access client, wherein in the multiple file location registers, a file location register corresponding to the file location register identifier is used for providing location information of a data block of the target file.
